(19) Europäisches Patentamt
European Patent Office
Office européen des brevets

(11) EP 2 450 186 A1

(12) **EUROPEAN PATENT APPLICATION**
published in accordance with Art. 153(4) EPC

(43) Date of publication:
**09.05.2012 Bulletin 2012/19**

(21) Application number: **10794215.3**

(22) Date of filing: **24.06.2010**

(51) Int Cl.:
***B32B 27/32*** *(2006.01)* ***C08L 23/02*** *(2006.01)*
***C08L 23/26*** *(2006.01)* ***C08L 51/06*** *(2006.01)*

(86) International application number:
**PCT/JP2010/061225**

(87) International publication number:
**WO 2011/002047 (06.01.2011 Gazette 2011/01)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.06.2009 JP 2009154753**

(71) Applicant: **Sumitomo Chemical Company, Limited**
**Tokyo 104-8260 (JP)**

(72) Inventors:
- **NAGANO, Masashi**
  **Osaka 566-0021 (JP)**
- **MAKINO, Shigeto**
  **Miki-shi**
  **Hyogo 673-1117 (JP)**

(74) Representative: **Vossius & Partner**
**Siebertstrasse 4**
**81675 München (DE)**

(54) **LAMINATE**

(57) A laminate comprising a layer formed of a cured product obtained by drying an aqueous emulsion composition comprising the following components (A), (B), (C) and (D), and an adherend;
(A) a copolymer which comprises at least one structural unit selected from the group consisting of a structural unit derived from ethylene, a structural unit derived from propylene and a structural unit derived from linear α-olefin having 4 or more carbon atoms, and a structural unit derived from a vinyl compound represented by the formula (I):

$$CH_2=CH-R \qquad (I)$$

wherein R represents a secondary alkyl group, a tertiary alkyl group or an alicyclic hydrocarbon group, and in which the content of the structural unit derived from the vinyl compound represented by the formula (I) is 5% by mole or more and 40% by mole or less, or
a modified copolymer obtained by graft polymerizing an α,β-unsaturated carboxylic acid compound to the above-mentioned copolymer,

(B) a copolymer obtained by graft polymerizing an α,β-unsaturated carboxylic acid compound to a copolymer which comprises at least one structural unit selected from the group consisting of a structural unit derived from ethylene, a structural unit derived from propylene and a structural unit derived from linear α-olefin having 4 or more carbon atoms, and which may contain a structural unit derived from the above-mentioned vinyl compound represented by the formula (I), and in which the content of the structural unit derived from the vinyl compound represented by the formula (I) is less than 5% by mole,
(C) an emulsifier
(D) water.

EP 2 450 186 A1

**Description**

Technical Field

The present invention relates to a laminate.

Background Art

A laminate obtained by applying an aqueous emulsion wherein a modified polyolefin obtained by graft polymerizing maleic anhydride and butyl methacrylate to a polyolefin having a structural unit derived from ethylene and a structural unit derived from propylene is dispersed in water on polypropylene plate followed by drying it is described in JP 2009-40920 A.

Disclosure of the Invention

The present invention provides:

<1> A laminate comprising a layer formed of a cured product obtained by drying an aqueous emulsion composition comprising the following components (A), (B), (C) and (D), and an adherend;

(A) a copolymer which comprises at least one structural unit selected from the group consisting of a structural unit derived from ethylene, a structural unit derived from propylene and a structural unit derived from linear α-olefin having 4 or more carbon atoms, and a structural unit derived from a vinyl compound represented by the formula (I):

$$CH_2=CH-R \qquad (I)$$

wherein R represents a secondary alkyl group, a tertiary alkyl group or an alicyclic hydrocarbon group, and in which the content of the structural unit derived from the vinyl compound represented by the formula (I) is 5% by mole or more and 40% by mole or less, or
a modified copolymer obtained by graft polymerizing an α,β-unsaturated carboxylic acid compound to the above-mentioned copolymer,

(B) a copolymer obtained by graft polymerizing an α,β-unsaturated carboxylic acid compound to a copolymer which comprises at least one structural unit selected from the group consisting of a structural unit derived from ethylene, a structural unit derived from propylene and a structural unit derived from linear α-olefin having 4 or more carbon atoms, and which may contain a structural unit derived from the above-mentioned vinyl compound represented by the formula (I), and in which the content of the structural unit derived from the vinyl compound represented by the formula (I) is less than 5% by mole,
(C) an emulsifier
(D) water;

<2> The laminate according to <1>, wherein the aqueous emulsion composition is obtained by mixing an aqueous emulsion comprising the components (A), (C) and (D) with an aqueous emulsion comprising the components (B) and (D);
<3> The laminate according to <1> or <2>, which comprises a cured product layer obtained from a composition comprising an aqueous emulsion comprising the components (A), (C) and (D), and an aqueous emulsion comprising the components (B) and (D), and an adherend;
<4> The laminate according to <1>, <2> or <3>, wherein the adherend is an adherend consisting of at least one material selected from the group consisting of a wood-based material, a cellulosic material, a plastic material, a ceramic material and a metallic material;
<5> The laminate according to any of <1> to <4>, wherein the emulsifier is a water-soluble acrylic resin comprising a structural unit derived from an α,β-unsaturated carboxylic acid and a structural unit derived from an α,β-unsaturated carboxylate;
<6> The laminate according to any of <1> to <5>, wherein R is a secondary alkyl group, a tertiary alkyl group or a cycloalkyl group;
<7> The laminate according to any of <1> to <6>, wherein the vinyl compound represented by the formula (I) is

vinylcyclohexane;
<8> The laminate according to <2> or <3>, wherein the aqueous emulsion comprising the components (A), (C) and (D) is an aqueous emulsion obtained by kneading the component (A) and (C) with the action of a shear stress followed by dispersing the kneaded product in the component (D);
<9> The laminate according to <2> or <3>, wherein the components other than water in the aqueous emulsion comprising the components (B) and (D) is 20 to 60 parts by weight relative to 100 parts by weight of the components other than water in the aqueous emulsion comprising the components (A), (C) and (D);
<10> An aqueous emulsion composition comprising the following components (A), (B), (C) and (D);

(A) a copolymer which comprises at least one structural unit selected from the group consisting of a structural unit derived from ethylene, a structural unit derived from propylene and a structural unit derived from linear α-olefin having 4 or more carbon atoms, and a structural unit derived from a vinyl compound represented by the formula (I):

$$CH_2{=}CH{-}R \qquad (I)$$

wherein R represents a secondary alkyl group, a tertiary alkyl group or an alicyclic hydrocarbon group, and in which the content of the structural unit derived from the vinyl compound represented by the formula (I) is 5% by mole or more and 40% by mole or less, or
a modified copolymer obtained by graft polymerizing an α,β-unsaturated carboxylic acid compound to the above-mentioned copolymer,

(B) a copolymer obtained by graft polymerizing an α,β-unsaturated carboxylic acid compound to a copolymer which comprises at least one structural unit selected from the group consisting of a structural unit derived from ethylene, a structural unit derived from propylene and a structural unit derived from linear α-olefin having 4 or more carbon atoms, and which may contain a structural unit derived from the above-mentioned vinyl compound represented by the formula (I), and in which the content of the structural unit derived from the vinyl compound represented by the formula (I) is less than 5% by mole,
(C) an emulsifier
(D) water;

<11> The aqueous emulsion composition according to <10>, which is obtained by mixing an aqueous emulsion comprising the components (A), (C) and (D) with an aqueous emulsion comprising the components (B) and (D);
<12> The aqueous emulsion composition according to <10> or <11>, wherein the emulsifier is a water-soluble acrylic resin comprising a structural unit derived from an α,β-unsaturated carboxylic acid and a structural unit derived from an α,β-unsaturated carboxylate;
<13> The aqueous emulsion composition according to any of <10> to <12>, wherein R is a secondary alkyl group, a tertiary alkyl group or a cycloalkyl group;
<14> The aqueous emulsion composition according to any of <10> to <13>, wherein the vinyl compound represented by the formula (I) is vinylcyclohexane;
<15> The aqueous emulsion composition according to <11>, wherein the aqueous emulsion comprising the components (A), (C) and (D) is an aqueous emulsion obtained by kneading the component (A) and (C) with the action of a shear stress followed by dispersing the kneaded product in the component (D);
<16> The aqueous emulsion composition according to <11>, wherein the components other than water in the aqueous emulsion comprising the components (B) and (D) is 20 to 60 parts by weight relative to 100 parts by weight of the components other than water in the aqueous emulsion comprising the components (A), (C) and (D);
<17> A process for producing a laminate comprising a step of applying the aqueous emulsion composition according to any of <10> to <16> onto an adherend to obtain a laminate comprising an aqueous emulsion layer and the adherend, and a step of drying the laminate obtained to obtain a laminate comprising a layer formed of a cured product and the adherend;
<18> Use of the aqueous emulsion composition according to any of <10> to <16> for forming a cured product layer on an adherend.

## Best Embodiment for Carrying Out the Invention

The laminate of the present invention comprises a layer formed of a cured product obtained by drying an aqueous emulsion composition comprising the following components (A), (B), (C) and (D), and an adherend;

(A) a copolymer which comprises at least one structural unit selected from the group consisting of a structural unit derived from ethylene (hereinafter, simply referred to as the structural unit (a1)), a structural unit derived from propylene (hereinafter, simply referred to as the structural unit (a2)) and a structural unit derived from linear α-olefin having 4 or more carbon atoms (hereinafter, simply referred to as the structural unit (a3)), and a structural unit derived from a vinyl compound represented by the formula (I):

$$CH_2=CH\text{-}R \qquad (I)$$

wherein R represents a secondary alkyl group, a tertiary alkyl group or an alicyclic hydrocarbon group (hereinafter, simply referred to as the vinyl compound (I)), and in which the content of the structural unit derived from the vinyl compound (I) is 5% by mole or more and 40% by mole or less, or
a modified copolymer obtained by graft polymerizing an α,β-unsaturated carboxylic acid compound to the above-mentioned copolymer,

(B) a copolymer obtained by graft polymerizing an α,β-unsaturated carboxylic acid compound to a copolymer which comprises at least one structural unit selected from the group consisting of a structural unit derived from ethylene (hereinafter, simply referred to as the structural unit (b1)), a structural unit derived from propylene (hereinafter, simply referred to as the structural unit (b2)) and a structural unit derived from linear α-olefin having 4 or more carbon atoms (hereinafter, simply referred to as the structural unit (b3)), and which may contain a structural unit derived from the vinyl compound (I), and in which the content of the structural unit derived from the vinyl compound (I) is less than 5% by mole,
(C) an emulsifier
(D) water;

First, the component (A) will be illustrated.
The component (A) is a copolymer which comprises at least one structural unit selected from the group consisting of the structural unit (a1), the structural unit (a2) and the structural unit (a3), and a structural unit derived from the vinyl compound (I), and in which the content of the structural unit derived from the vinyl compound (I) is 5% by mole or more and 40% by mole or less (hereinafter, simply referred to as the copolymer A), or a modified copolymer obtained by graft polymerizing an α,β-unsaturated carboxylic acid compound to the above-mentioned copolymer A (hereinafter, simply referred to as the modified product A).
The component (A) may be the copolymer A, the modified product A, or a mixture of the copolymer A and the modified product A. The component (A) may contain two or more kinds of the copolymer A, and may contain two or more kinds of the modified product A.
The copolymer A can contain two or more kinds of the structural unit (a3).
Examples of the linear α-olefin having 4 or more carbon atoms from which the structural unit (a3) is derived include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nanodecene and 1-eicosene, and a linear α-olefin having 4 to 20 carbon atoms is preferable, and 1-butene, 1-pentene, 1-hexene and 1-octene are more preferable.
The copolymer A preferably contains the structural unit (A), and it is preferred that the copolymer A is a copolymer consisting of the structural unit (A) and the structural unit derived from the vinyl compound (I).
The content of at least one structural unit selected from the group consisting of the structural unit (a1), the structural unit (a2) and the structural unit (a3) in the copolymer A is more than 60% by mole and less than 95% by mole relative to 100% by mole of the all structural units of which the copolymer A are composed, and preferably more than 70% by mole and less than 90% by mole, and more preferably more than 80% by mole and less than 90% by mole. The content of the structural unit derived from the vinyl compound (I) in the copolymer A is 5% by mole or more and 40% by mole or less relative to 100% by mole of the all structural units of which the copolymer A are composed, and preferably 10% by mole or more and 30% by mole or less, and more preferably 10% by mole or more and 20% by mole or less.
In the formula of the vinyl compound (I), R represents a secondary alkyl group, a tertiary alkyl group or an alicyclic hydrocarbon group. As the secondary alkyl group, a secondary alkyl group having 3 to 20 carbon atoms is preferable. As the tertiary alkyl group, a tertiary alkyl group having 4 to 20 carbon atom is preferable. As the alicyclic hydrocarbon group, an alicyclic hydrocarbon group having a three- to sixteen-membered ring is preferable, and examples thereof include a cycloalkyl group, a cycloalkenyl group and a cycloalkynyl group, and a cycloalkyl group is more preferable, and a cycloalkyl group having a three- to sixteen-membered ring is especially preferable.
As R, a cycloalkyl group having 3 to 20 carbon atoms and having a three- to ten-membered ring and a tertiary alkyl group having 4 to 20 carbon atoms are more preferable.

Examples of the vinyl compound (I) include the vinyl compound (I) wherein R is a secondary alkyl group such as 3-methyl-1-butene, 3-methyl-1-pentene, 3-methyl-1-hexene, 3-methyl-1-heptene, 3-methyl-1-octene, 3,4-dimethyl-1-pentene, 3,4-dimethyl-1-hexene, 3,4-dimethyl-1-heptene, 3,4-dimethyl-1-octene, 3,5-dimethyl-1-hexene, 3,5-dimethyl-1-heptene, 3,5-dimethyl-1-octene, 3,6-dimethyl-1-heptene, 3,6-dimethyl-1-octene, 3,7-dimethyl-1-octene, 3,4,4-trimethyl-1-pentene, 3,4,4-trimethyl-1-hexene, 3,4,4-trimethyl-1-heptene and 3,4,4-trimethyl-1-octene; the vinyl compound (I) wherein R is a tertiary alkyl group such as 3,3-dimethyl-1-butene, 3,3-dimethyl-1-pentene, 3,3-dimethyl-1-hexene, 3,3-dimethyl-1-heptene, 3,3-dimethyl-1-octene, 3,3,4-trimethyl-1-pentene, 3,3,4-trimethyl-1-hexene, 3,3,4-trimethyl-1-heptene and 3,3,4-trimethyl-1-octene; the vinyl compound (I) wherein R is a cycloalkyl group such as vinylcyclopropane, vinylcyclobutane, vinylcyclopentane, vinylcyclohexane, vinylcycloheptane and vinylcyclooctane; 1-vinyladamantane, 5-vinyl-2-norbornene and 4-vinyl-1-cyclohexene.

Among them, preferred are 3-methyl-1-butene, 3-methyl-1-pentene, 3-methyl-1-hexene, 3,4-dimethyl-1-pentene, 3,5-dimethyl-1-hexene, 3,4,4-trimethyl-1-pentene, 3,3-dimethyl-1-butene, 3,3-dimethyl-1-pentene, 3,3,4-trimethyl-1-pentene, vinylcyclopentane, vinylcyclohexane, vinylcycloheptane, vinylcyclooctane and 5-vinyl-2-norbornene, and more preferred are 3-methyl-1-butene, 3-methyl-1-pentene, 3,4-dimethyl-1-pentene, 3,3-dimethyl-1-butene, 3,3,4-trimethyl-1-pentene, vinylcyclohexane and vinylnorbornene, and especially preferred are 3,3-dimethyl-1-butene and vinylcyclohexane, and most preferred is vinylcyclohexane.

The content of the structural unit derived from the vinyl compound (I) can be calculated by conducting $^1$H-NMR analysis or $^{13}$C-NMR analysis of the copolymer A.

The copolymer A may further contain a structural unit derived from an addition-polymerizable monomer. The addition-polymerizable monomer does not include ethylene, propylene, linear α-olefins having 4 or more carbon atoms, and the vinyl compound (I). The addition-polymerizable monomer is a monomer which is addition-polymerizable with ethylene, propylene, a linear α-olefin and/or the vinyl compound (I), and the carbon number of such monomer is usually about 3 to about 20.

Specific examples of the addition-polymerizable monomer include a cycloolefin, an olefin represented by the formula (II) :

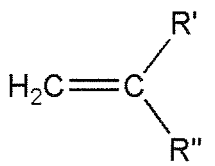

( II )

wherein, R' and R" each independently represent a linear, branched chain or cyclic alky group having 1 to 18 carbon atoms or a halogen atom, a diene compound, a vinyl halide, a vinyl aliphatic carboxylate, a vinyl ether compound and a cyanovinyl compound.

Examples of the cycloolefin include cyclobutene, cyclopentene, cyclohexene, cyclooctene, 3-methylcyclopentene, 4-methylcyclopentene, 3-methylcyclohexene, 2-norbornene, 5-methyl-2-norbornene, 5-ethyl-2-norbornene, 5-butyl-2-norbornene, 5-phenyl-2-norbornene, 5-benzyl-2-norbornene, 2-tetracyclododecene, 2-tricyclodecene, 2-tricycloundecene, 2-pentacyclopentadecene, 2-pentacyclohexadecene, 8-methyl-2-tetracyclododecene, 8-ethyl-2-tetracyclododecene, 5-acetyl-2-norbornene, 5-acetyloxy-2-norbornene, 5-methoxycarbonyl-2-norbornene, 5-ethoxycarbonyl-2-norbornene, 5-methyl-5-methoxycarbonyl-2-norbornene, 5-cyano-2-norbornene, 8-methoxycarbonyl-2-tetracyclododecene, 8-methyl-8-methoxycarbonyl-2-tetracyclododecene and 8-cyano-2-tetracyclododecene. Among them, preferred are cyclopentene, cyclohexene, cyclooctene, 2-norbornene, 5-methyl-2-norbornene, 5-phenyl-2-norbornene, 2-tetracyclododecene, 2-tricyclodecene, 2-tricycloundecene, 2-pentacyclopentadecene, 2-pentacyclohexadecene, 5-acetyl-2-norbornene, 5-acetyloxy-2-norbornene, 5-methoxycarbonyl-2-norbornene, 5-methyl-5-methoxycarbonyl-2-norbornene and 5-cyano-2-norbornene, and more preferred are 2-norbornene and 2-tetracyclododecene.

Examples of the olefin represented by the formula (II) include isobutene, 2-methyl-1-butene, 2-methyl-1-pentene, 2-methyl-1-hexene, 2-methyl-1-heptene, 2-methyl-1-octene, 2,3-dimethyl-1-butene, 2,3-dimethyl-1-pentene, 2,3-dimethyl-1-hexene, 2,3-dimethyl-1-heptene, 2,3-dimethyl-1-octene, 2,4-dimethyl-1-pentene, 2,4,4-trimethyl-1-pentene and vinylidene chloride, and isobutene, 2,3-dimethyl-1-butene and 2,4,4-trimethyl-1-pentene are preferable.

Examples of the diene compound include 1,3-butadiene, 1,4-pentadiene, 1,5-hexadiene, 1,6-heptadiene, 1,7-octadiene, 1,5-cyclooctadiene, 2,5-norbornadiene, dicyclopentadiene, 5-vinyl-2-norbornene, 5-allyl-2-norbornene, 4-vinyl-1-cyclohexene and 5-ethylidene-2-norbornene, and 1,4-pentadiene, 1,5-hexadiene, 2,5-norbornadiene, dicyclopentadiene, 5-vinyl-2-norbornene, 4--vinyl-1-cyclohexene and 5-ethylidene-2-norbornene are preferable.

Examples of the vinyl aliphatic carboxylate include vinyl acetate, vinyl propionate and vinyl butyrate. Examples of the vinyl ether compound include methyl vinyl ether, ethyl vinyl ether and butyl vinyl ether. Examples of the vinyl halide include vinyl chloride, and examples of the cyanovinyl compound include acrylonitrile and methacrylonitrile.

The content of the structural unit derived from the addition-polymerizable monomer in the copolymer A may be an amount where the adhesiveness of the cured product obtained by drying the aqueous emulsion composition is not diminished, and the content thereof is preferably 5% by mole or less relative to 100% by mole of all structural units from which the copolymer A is derived, and is more preferably 1% by mole or less.

The copolymer A can be produced by polymerizing the corresponding monomers using a transition metal compound having a group having an indenyl anion skeleton or a bridged cyclopentadienyl anion skeleton as a catalyst. Among them, processes described in JP 2003-82028 A, JP 2003-160621 A and JP 2000-128932 A are preferable.

In the production of the copolymer A, a homopolymer of ethylene, a homopolymer of propylene and/or a homopolymer of the vinyl compound (I) are sometimes produced in addition to the copolymer A depending on kinds of the catalyst used or polymerization conditions. In such cases, the copolymer A can be easily isolated by conducting a solvent-extraction using Soxhlet extractor or the like. When toluene is used as the solvent, a homopolymer of vinylcyclohexene can be removed as an insoluble component. When chloroform is used as the solvent, a homopolymer of the olefin such as a homopolymer of ethylene, a homopolymer of propylene and the like can be removed as an insoluble component. The copolymer A can be separated as a soluble component in these solvents. If there is no problem in its use, the copolymer A containing by-products as described above may be used.

A molecular weight distribution of the copolymer A (Mw/Mn=[weight-average molecular weight]/[number-average molecular weight]) is usually about 1.5 to about 10.0, and from the viewpoint of the mechanical strength and transparency of the cured product obtained by drying the aqueous emulsion composition, it is preferably about 1.5 to about 7.0, and more preferably about 1.5 to about 5.0.

From the viewpoint of the mechanical strength of the cured product obtained by drying the aqueous emulsion composition and the flowability of the copolymer A, the weight-average molecular weight (Mw) of the copolymer A is preferably about 5, 000 to about 1,000,000, and more preferably about 10,000 to about 500,000, and especially preferably about 15,000 to about 400,000.

The molecular weight distribution of the copolymer A can be calculated with gel permeation chromatography (GPC).

An intrinsic viscosity [η] of the copolymer A is usually about 0.25 to about 10 dl/g, and preferably about 0.3 to about 3 dl/g from the viewpoint of the mechanical strength of the cured product obtained by drying the aqueous emulsion composition.

The modified product A is a polymer obtained by graft polymerizing an α,β-unsaturated carboxylic acid compound to the copolymer A.

The graft polymerization amount of the α,β-unsaturated carboxylic acid compound is usually about 0.01 to about 20% by weight relative to 100% by weight of the modified product A, preferably about 0.05 to about 10% by weight and more preferably about 0.1 to about 5% by weight.

The aqueous emulsion composition comprising the modified product A in which the graft polymerization amount of the α,β-unsaturated carboxylic acid compound is 0.01% by weight or more is preferable because the adhesiveness of the cured product obtained by drying the composition tends to be improved. The aqueous emulsion composition comprising the modified product A in which the graft polymerization amount of the α,β-unsaturated carboxylic acid compound is 20% by weight or less is preferable because the heat stability thereof tends to be improved.

The α,β-unsaturated carboxylic acid compound include an α,β-unsaturated carboxylic acid, an α,β-unsaturated carboxylic acid anhydride, an α,β-unsaturated carboxylate, an α,β-unsaturated carboxylic amide, an α,β-unsaturated carboxylic imide, an α,β-unsaturated carboxylic halide and a metal salt of an α,β-unsaturated carboxylic acid. Two or more kinds of the α,β-unsaturated carboxylic acid compound can be used.

Examples of the α,β-unsaturated carboxylic acid include an α,β-unsaturated carboxylic acid having 3 to 20 carbon atoms such as acrylic acid, methacrylic acid, crotonic acid, isocrotonic acid, maleic acid, fumaric acid, itaconic acid, citraconic acid, angelic acid, sorbic acid and mesaconic acid. As the α,β-unsaturated carboxylic acid, an α,β-unsaturated carboxylic acid having one or two carboxyl groups (-COOH) is preferable. Examples of the α,β-unsaturated carboxylic acid anhydride having 4 to 20 carbon atoms such as maleic anhydride, itaconic anhydride and citraconic anhydride, and maleic anhydride is preferable. Two or more kinds of the α,β-unsaturated carboxylic acid anhydrides may be used in combination.

Examples of the α,β-unsaturated carboxylate include an ester of an α,β-unsaturated carboxylic acid having 3 to 20 carbon atoms such as methyl acrylate, methyl methacrylate, ethyl acrylate, ethyl methacrylate, butyl acrylate, butyl methacrylate, isobutyl acrylate, isobutyl methacrylate, glycidyl acrylate, glycidyl methacrylate, monoethyl maleate, diethyl maleate, monomethyl fumalate, dimethyl fumalate, monomethyl itaconate and dimethyl itaconate. Examples of the α, β-unsaturated carboxylic amide include an amide of an α,β-unsaturated carboxylic acid having 3 to 20 carbon atoms such as acrylamide, methacrylamide, maleic monoamide, maleic diamide, N-ethylmaleic monoamide, N,N-diethylmaleic monoamide, N-butylmaleic monoamide, N,N-dibutylmaleic monoamide, fumalic monoamide, fumalic diamide, N-ethylfumalic monoamide, N,N-diethylfumalic monoamide, N-butylfumalic monoamide, and N,N-dibutylfumalic monoamide. Examples of the α,β-unsaturated carboxylic imide include maleimide, N-butylmaleimide and N-phenylmaleimide. Examples of the α,β-unsaturated carboxylic halide include maleoyl chloride. Exampels of the metal salt of an α,β-unsaturated carboxylic acid include an alkali metal salt of an α,β-unsaturated carboxylic acid having 3 to 20 carbon atoms such as sodium acrylate, sodium methacrylate, potassium acrylate and potassium methacrylate.

Among them, preferred is an α,β-unsaturated carboxylic acid anhydride, and more preferred is maleic anhydride.

The modified product A can be produced, for example, according to the process comprising adding the α,β-unsaturated carboxylic acid anhydride to a melted copolymer A obtained by melting the copolymer A to conduct a graft polymerization, a process comprising dissolving the copolymer A in a solvent such as toluene and xylene followed by adding the α,β-unsaturated carboxylic acid anhydride to the solution obtained to conduct a graft polymerization or the like.

The graft polymerization is usually conducted in the presence of a radical initiator.

When the amount used of the radical initiator is small, the graft polymerization amount of the α,β-unsaturated carboxylic acid compound becomes less amount, and the adhesiveness of the cured product obtained by drying the aqueous emulsion composition tends to be difficult to be improved, and when it is large, the amount of the unreacted radical initiator contained in the modified product A tends to be increased, and therefore, it is usually 0.01 to 10 parts by weight relative to 100 parts by weight of the copolymer A, and preferably 0.01 to 1 part by weight.

As the radical initiator, an organic peroxide is usually used, and an organic peroxide having a decomposition temperature of 50 to 210°C at which the half life thereof becomes 1 minute is preferable. When an organic peroxide having a decomposition temperature of 50°C or more is used, the graft polymerization amount of the α,β-unsaturated carboxylic acid compound tends to increase, and when an organic peroxide having a decomposition temperature of 210°C or less is used, the decomposition of the copolymer A tends to be inhibited. An organic peroxide having an activity of extracting a proton from the copolymer A after decomposing to generate a radical.

Examples of the organic peroxide of which the temperature of decomposition wherein the half period becomes 1 minute is 50 to 210°C include diacylperoxide compounds, dialkylperoxide compounds, peroxyketal compounds, alkyl perester compounds and percarbonate compounds, and dialkylperoxide compounds, diacylperoxide compounds, percarbonate compounds and alkyl perester compounds are preferable. Specific examples thereof include dicetyl peroxydicarbonate, di-3-methoxybutyl peroxydicarbonate, di-2-ethylhexyl peroxydicarbonate, bis(4-tert-butyl cyclohexyl) peroxydicarbonate, diisopropyl peroxydicarbonate, tert-butyl peroxyisopropylcarbonate, dimyristyl peroxycarbonate, 1,1,3,3-tetramethylbutyl peroxyneodecanoate, α-cumyl peroxyneodecanoate, tert-butyl peroxyneodecanoate, 1,1bis (tert-butylperoxy)cyclohexane, 2,2bis(4,4-di-tert-butylperoxycyclohexyl)propane, 1,1-bis(tert-butylperoxy)cyclododecane, tert-hexylperoxyisopropylmonocarbonate, tert-butylperoxy-3,5,5-trimethylhexanoate, tert-butylperoxylaurate, 2,5dimethyl-2,5-di(benzoylperoxy)hexane, tert-butylperoxyacetate, 2,2-bis(tert-butylperoxy)butene, tert-butylperoxybenzoate, butyl 4,4-bis(tert-butylperoxy)valerate, di-tert-butylbeloxyisophthalate, dicumylperoxide, α-α'-bis(tert-butylperoxy-m-isopropyi)benzene, 2,5-dimethyl-2,5-di(tert-butylperoxy)hexane, 1,3-bis(tert-butylperoxyisopropyl)benzene, tert-butylcumylperoxide, di-tert-butylperoxide, p-menthanehydroperoxide and 2,5-dimethyl-2,5-di(tert-butylperoxy)-3-hexyne.

The additive amount of the organic peroxide is usually 0.01 to 20 parts by weight relative to 100 parts by weight of the copolymer A and preferably 0.05 to 10 parts by weight.

The melt-kneading can be carried out using an extruding machine, and from the viewpoint that well-known various processes for mixing plural copolymers or a copolymer and a solid or liquid additives can be adopted, a process adding an α,β-unsaturated carboxylic acid compound to a melted copolymer A obtained by melting the copolymer A to conduct a graft polymerization is preferable. A process comprising separately mixing all of the components or some of the components in combination with Henschel mixer, ribbon blender, blender or the like to obtain a uniform mixture followed by melt-kneading the mixture is more preferable. As the melt-kneading means, well-known kneading means such as Bamberry mixer, Plastomill, Brabender Plastograph and monoaxially or biaxially extruder can be widely adopted. From the viewpoint of being able to continuously produce the modified product A and improving the productivity, a process comprising feeding the mixture obtained by previously mixing enough the copolymer A, the α,β-unsaturated carboxylic acid compound and the radical initiator from the feed opening of the extruder using a monoaxially or biaxially extruder to conduct kneading is preferable. The temperature of the section of the extruder in which melt-kneading is conducted, for example, the cylinder temperature of the extruder, is usually 50 to 300°C, preferably 80 to 270°C. When the temperature is 50°C or more, the graft amount tends to be improved, and when the temperature is 300°C or less, the decomposition of the copolymer A tends to be inhibited. The melt-kneading is preferably conducted in two stage, and it is preferred that the temperature on second stage is set higher than that of the first stage. The melt-kneading time is usually 0.1 to 30 minutes and preferably 0.1 to 5 minutes. When the melt-kneading time is 0.1 minute or more, the graft amount tends to be improved, and when the melt-kneading time is 30 minutes or less, the decomposition of the copolymer A tends to be inhibited.

The molecular weight distribution (Mw/Mn) of the modified product A is usually 1.5 to 10, preferably 1.5 to 7 and more preferably 1.5 to 5. The molecular weight distribution of the modified product A can be measured with the same method as that of the above-mentioned molecular weight distribution of the copolymer A.

An intrinsic viscosity [η] of the modified product A is usually about 0.25 to about 10 dl/g, and preferably about

0.3 to about 3 dl/g.

Next, the component (B) will be illustrated. The component (B) is a copolymer (hereinafter, simply referred to as the copolymer B') obtained by graft polymerizing an α,β-unsaturated carboxylic acid compound to a copolymer (hereinafter, simply referred to as the copolymer B) which comprises at least one structural unit selected from the group consisting of the structural unit (b1), the structural unit (b2) and the structural unit (b3), and which may contain the structural unit derived from the vinyl compound (I), and in which the content of the structural unit derived from the vinyl compound (I) is less than 5% by mole.

Examples of the structural unit (b3) include the same as the above-mentioned structural unit (a3).

The content of the structural unit derived from the vinyl compound (I) in the copolymer B is preferably less than 1% by mole relative to 100% by mole of all structural units of the copolymer B, and it is more preferred that the no structural unit derived from the vinyl compound (I) contained therein.

The copolymer B is preferably a copolymer consisting of the structural unit (b1) and the structural unit (b2).

The copolymer B can further contain the above-mentioned structural unit derived from an addition-polymerizable monomer.

The copolymer B can be produced by the same process as the process for producing the copolymer A. Alternatively, commercially available copolymers such as VESTPLAST (trade name of Degussa), LICOCENE (registered trademark by Clariant), TOUGHCELLEN (registered trademark by Sumitomo Chemical Co., Ltd.).

The copolymer B' is obtained by graft polymerizing an α,β-unsaturated carboxylic acid compound to the copolymer B. Examples of the α,β-unsaturated carboxylic acid compound include the same as described above, and an α,β-unsaturated carboxylic acid anhydride and an α,β-unsaturated carboxylate are preferable. Two or more kinds of the α,β-unsaturated carboxylic acid compound can be used in combination.

The copolymer B' can be produced, for example, by a process comprising adding the α,β-unsaturated carboxylic acid compound to a solution obtained by dissolving the copolymer B in an organic solvent to conduct a graft polymerization. Examples of the organic solvent include an ester solvent such as ethyl acetate, propyl acetate, butyl acetate, ethyl propionate, propyl propionate, butyl propionate, ethyl butyrate, propyl butyrate and butyl butyrate, an alkylene glycol alkyl ether ester solvent such as ethylene glycol monoethyl ether acetate, ethylene glycol monobutyl ether acetate and propylene glycol monomethyl ether acetate, a dialkylene glycol alkyl ether ester solvent such as diethylene glycol monoethyl ether acetate and diethylene glycol monobutyl ether acetate.

The graft polymerization is usually carried out in the presence of a radical initiator, and examples of the radical initiator include the same as described above.

The graft polymerization can be conducted in the presence of a stabilizer. Examples of the stabilizer include sorbitol, sorbitol alkylate, hydroquinone, benzoquinone, a nitrosophenylhydroxy compound, a phosphite compound such as tris(2,4-di-tert-butylphenyl)phosphite, and a pentaerythritol ester such as pentaerythrityl-tetrakis[3-(3,5-di-tert-butyl-4-hydroxypheny 1)propionate]. Two or more kinds of the stabilizer can be used in combination.

The graft amount of the α,β-unsaturated carboxylic acid compound is usually about 0.5 to 50% by weight relative to 100% by weight of the copolymer B', and preferably about 1 to 30% by weight.

Next, the component (C) will be illustrated. The component (C) is an emulsifier, and examples thereof include a non-ionic surfactant, an anionic surfactant, a cationic surfactant, an ampholytic surfactant and a water-soluble acrylic resin, and a water-soluble acrylic resin is preferable.

Examples of the non-ionic surfactant include a polyoxyethylene alkyl ether such as polyoxyethylene lauryl ether,; a polyoxyethylene alkylphenyl ether such as polyoxyethylene octylphenyl ether and polyoxyethylene nonylphenyl ether; and a polyoxyethylene sorbitan fatty acid ester such as polyoxyethylene sorbitan monolaurate and polyoxyethylene sorbitan monooleate.

Examples of the anionic surfactant include lauryl sulfate, lauryl sulfate salt (for example, an alkali metal salt such as sodium salt and potassium salt, an alkaline earth metal salt such as calcium salt, ammonium salt, amine salt such as triethylamine salt), dodecylbenzenesulfonic acid, a dodecylbenzenesulfonic acid salt (for example, an alkali metal salt such as sodium salt and potassium salt, an alkaline earth metal salt such as calcium salt, ammonium salt, amine salt such as triethylamine salt), a dialkyl sulfosuccinic acid, a dialkyl sulfosuccinic acid salt (for example, an alkali metal salt such as sodium salt and potassium salt, an alkaline earth metal salt such as calcium salt, ammonium salt, amine salt such as triethylamine salt), a polyoxyethylene alkyl ether sulfate, a polyoxyethylene alkyl ether sulfate salt (for example, an alkali metal salt such as sodium salt and potassium salt, an alkaline earth metal salt such as calcium salt, ammonium salt, amine salt such as triethylamine salt), a polyoxyethylene alkylphenyl ether sulfate, a polyoxyethylene alkylphenyl ether sulfate salt (for example, an alkali metal salt such as sodium salt and potassium salt, an alkaline earth metal salt such as calcium salt, ammonium salt, amine salt such as triethylamine salt), a fattyl acid, fattyl acid salt (for example, an alkali metal salt such as sodium salt and potassium salt, an alkaline earth metal salt such as calcium salt, ammonium salt, amine salt such as triethylamine salt), an alkenyl succinic acid, and an alkenyl succinic acid salt (for example, an alkali metal salt such as sodium salt and potassium salt, an alkaline earth metal salt such as calcium salt, ammonium salt, amine salt such as triethylamine salt).

"Water-soluble acrylic resin" means a water-soluble resin comprising a structural unit derived from an α,β-unsaturated carboxylic acid, and it can be used in the form of an aqueous solution.

Examples of the α,β-unsaturated carboxylic acid include an α,β-unsaturated carboxylic acid having 3 to 20 carbon atoms such as acrylic acid, methacrylic acid, crotonic acid, isocrotonic acid, maleic acid, fumaric acid, itaconic acid, citraconic acid, angelic acid, tetrahydrophthalic acid, sorbic acid and mesaconic acid. As the α,β-unsaturated carboxylic acid, an α,β-unsaturated carboxylic acid having one or two carboxyl groups (-COOH) is preferable. Among them, preferred are acrylic acid and methacrylic acid.

The water-soluble acrylic resin can contain two or more kinds of the structural unit derived from the α,β-unsaturated carboxylic acid.

The water-soluble acrylic resin can contain other structural unit such as an α,β-unsaturated carboxylic acid compound other than the α,β-unsaturated carboxylic acid; a vinyl halide such as vinyl chloride and vinyl bromide; a vinylidene halide such as vinylidene chloride; a vinyl compound such as vinylphosphonic acid, vinylsulfonic acid and the salts thereof; an aromatic vinyl such as styrene, α-methylstyrene and chlorostyrene; a cyanovinyl compound such as (meth)acrylonitrile; an acrylamide compound such as N-methylolacrylamide and N-butoxymethylacrylamide; a conjugated diene such as butadiene and isoprene; an allyl compound such as allyl sulfonate, diallyl phthalate, triallyl cyanurate and trially isocyanurate in addition to the structural unit derived from the α,β-unsaturated carboxylic acid. The water-soluble acrylic resin can contain two or more kinds of other structural units.

As the α,β-unsaturated carboxylic acid compound other than the α,β-unsaturated carboxylic acid, an α,β-unsaturated carboxylate is preferable.

Examples of the α,β-unsaturated carboxylate include an alkyl ester of an α,β-unsaturated carboxylic acid derived from an aliphatic alcohol having 1 to 20 carbon atoms and an α,β-unsaturated carboxylic acid, an aminoalkyl ester of an α,β-unsaturated carboxylic acid derived from an aliphatic alcohol having 1 to 10 carbon atoms and having an amino group which may have a substituent(s) and an α,β-unsaturated carboxylic acid, a hydroxyalkyl ester of an α,β-unsaturated carboxylic acid derived from an aliphatic polyalcohol having 1 to 10 carbon atoms and an α,β-unsaturated carboxylic acid, a carboxylic acid group-containing alkyl ester of an α,β-unsaturated carboxylic acid derived from an aliphatic alcohol having a carboxylic acid group and having 1 to 10 carbon atoms and an α,β-unsaturated carboxylic acid, and a polyalkylene glycol ester of an α,β-unsaturated carboxylic acid derived from a polyalkylene glycol and an α,β-unsaturated carboxylic acid.

Examples of the α,β-unsaturated carboxylic acid include the same as described above, and acrylic acid and methacrylic acid are preferable.

Examples of the aliphatic alcohol having 1 to 20 carbon atoms include a linear, branched chain or cyclic aliphatic alcohol having 1 to 20 carbon atoms such as methanol, ethanol, propanol, isopropanol, butanol, tert-butanol, pentanol, 3-methylbutnaol, 2,2-dimethylpropanol, 3-methyl-2-butanol, 2-ethylhexanol, nonanol, decanol, dodecanol, tridecanol, hexadecanol, octadecanol and cyclohexanol.

Examples of the alkyl ester of the α,β-unsaturated carboxylic acid include methyl acrylate, ethyl acrylate, propyl acrylate, butyl acrylate, amyl acrylate, ethylhexyl acrylate, nonyl acrylate, decanyl acrylate, lauryl acrylate, cetyl acrylate, stearyl acrylate, cyclohexyl acrylate, methyl methacrylate, ethyl methacrylate, propyl methacrylate, butyl methacrylate, amyl methacrylate, ethylhexyl methacrylate, nonyl methacrylate, decanyl methacrylate, lauryl methacrylate, cetyl methacrylate, stearyl methacrylate and cyclohexyl methacrylate.

Examples of the amino group which may have a substituent(s) include an amino group; an amino group having a linear, branched chain or cyclic alkyl group having 1 to 10 carbon atoms such as a methylamino group, an ethyamino group, a propylamino group, an isopropylamino group, a butylamino group, an isobutylamino group, a sec-butylamino group and a tert-butylamino group; an amino group having two linear, branched chain or cyclic alkyl groups having 1 to 10 carbon atoms such as a dimethylamino group, a methylethyamino group, a diethylamino group and a dipropylamino group; and a cyclic amino group. An amino group having two linear, branched chain or cyclic alkyl groups having 1 to 10 carbon atoms is preferable, and an amino group having two linear, branched chain or cyclic alkyl groups having 1 to 3 carbon atoms is more preferable.

Examples of the aliphatic alcohol having 1 to 10 carbon atoms and having an amino group which may have a substituent(s) include N,N-dimethylaminoethanol, N,N-diethylaminoethanol, N-methyl-N-ethylaminoethanol, N,N-dipropylaminoethanol, N-methyl-N-propylaminoethanol, N-ethyl-N-propylaminoethanol, N,N-dimethylaminopropanol and N,N-dimethylaminobutanol.

Examples of the aminoalkyl ester of the α,β-unsaturated carboxylic acid include N,N-diethylaminoethyl acrylate, N,N-diethylaminoethyl methacrylate, N,N-dimethylaminoethyl acrylate, N,N-dimethylaminoethyl methacrylate, N-methyl-N-ethylaminoethyl acrylate and N-methyl-N-ethylaminoethyl methacrylate.

Examples of the aliphatic polyalcohol having 1 to 10 carbon atoms include hydroxymethanol, hydroxyethanol, hydroxypropanol, hydroxybutanol, hydroxypentanol and hydroxyhexanol.

Examples of the hydroxyalkyl ester of an α,β-unsaturated carboxylic acid include hydroxymethyl acrylate, hydroxyethyl acrylate, hydroxypropyl acrylate, hydroxybutyl acrylate, hydroxypentyl acrylate, hydroxyhexyl acrylate,

hydroxymethyl methacrylate, hydroxyethyl methacrylate, hydroxypropyl methacrylate, hydroxybutyl methacrylate, hydroxypentyl methacrylate and hydroxyhexyl methacrylate.

"Carboxylic acid group" in the aliphatic alcohol having a carboxylic acid group and having 1 to 10 carbon atoms means an organic group having a carboxyl group (-COOH), and examples thereof include a carboxymethyl group, a 1,2-dicarboxyethyl group, a 2-carboxyphenyl group and a 2,3-dicarboxyphenyl group.

Examples of the carboxylic acid group-containing alkyl ester of the α,β-unsaturated carboxylic acid include 2-acryloyloxyethyl succinic acid, 2-acryloyloxyethyl phthalic acid, 2-methacryloyloxyethyl succinic acid and 2-methacryloyloxyethyl phthalic acid.

Examples of the polyalkylene glycol include a polyalkylene glycol wherein 1 to 50 alkyl groups having 1 to 4 carbon atoms are bonded via oxygen atoms in which terminal hydroxyl group may be protected with an alkyl group having 1 to 20 carbon atoms, an acryl group, methacryl group or the like such as polyethylene glycol, polypropylene glycol, polyethylene glycol polypropylene glycol, polyethylene glycol polytetramethylene glycol and methoxypolyethylene glycol.

Examples of the polyalkylene glycol ester of the α,β-unsaturated carboxylic acid include polypropylene glycol acrylate, polyethylene glycol acrylate, polyethylene glycol polypropylene glycol acrylate, polyethylene glycol polytetramethylene glycol monoacrylate, methoxypolyethylene glycol acrylate, polypropylene glycol methacrylate, polyethylene glycol methacrylate, polyethylene glycol polypropylene glycol methacrylate, polyethylene glycol polytetramethylene glycol monomethacrylate and methoxypolyethylene glycol methacrylate.

The content of the structural unit derived from the α,β-unsaturated carboxylic acid in the water-soluble acrylic resin is usually 5 to 95% by mole relative to 100% by mole of all structural units of which the water-soluble acrylic resin is composed, and preferably 5 to 80% by mole.

The water-soluble acrylic resin preferably contains the structural unit derived from the alkyl ester of the α,β-unsaturated carboxylic acid. When the water-soluble acrylic resin contains the structural unit derived from the α,β-unsaturated carboxylic acid ester, the content thereof is usually 5 to 95% by mole relative to 100% by mole of all structural units of which the water-soluble acrylic resin is composed, and preferably 20 to 95% by mole.

The water-soluble acrylic resin can contain a structural unit derived from ethylene, a structural unit derived from a linear α-olefin, a structural unit derived from the vinyl compound (I), or a structural unit derived from the above-mentioned addition-polymerizable monomer, and the content thereof may be in the range where the adhesiveness of the cured product obtained by drying the aqueous emulsion composition is not diminished, and it is usually 5% by mole or less relative to 100% by mole of all structural units of which the water-soluble acrylic resin is composed, and preferably 1% by mole or less, and it is preferred that these structural units are not substantially contained therein.

When the water-soluble acrylic resin contains the structural unit derived from the aminoalkyl ester of an α,β-unsaturated carboxylic acid, the content thereof is usually 1 to 80% by mole relative to 100% by mole of all structural units of which the water-soluble acrylic resin is composed, and preferably 1 to 50% by mole.

When the water-soluble acrylic resin contains the structural unit derived from the carboxylic acid group-containing alkyl ester of an α,β-unsaturated carboxylic acid, the content thereof is usually 0.1 to 80% by mole relative to 100% by mole of all structural units of which the water-soluble acrylic resin is composed, and preferably 5 to 40% by mole.

The content of the structural unit derived from the hydroxyalkyl ester of an α,β-unsaturated carboxylic acid is usually 0 to 50% by mole relative to 100% by mole of all structural units of which the water-soluble acrylic resin is composed, and preferably 0 to 30% by mole, and more preferably 1% by mole or less.

The content of the structural unit derived from the polyalkylene glycol ester of an α,β-unsaturated carboxylic acid is usually 0 to 50% by mole relative to 100% by mole of all structural units of which the water-soluble acrylic resin is composed, and preferably 0 to 30% by mole, and more preferably 1% by mole or less.

Preferable examples of the emulsifier include a water-soluble acrylic resin wherein the content of the structural unit derived from the α,β-unsaturated carboxylic acid is 5 to 80% by mole, the content of the alkyl ester of the α,β-unsaturated carboxylic acid is 10 to 80% by mole, the content of the aminoalkyl ester of an α,β-unsaturated carboxylic acid is 1 to 50% by mole and the content of the carboxylic acid group-containing alkyl ester of an α,β-unsaturated carboxylic acid is 5 to 30% by mole, and sum of the above-mentioned four structural units is 100% by mole relative to 100% by mole of all structural units of which the water-soluble acrylic resin is composed.

The component (C) may further contain an ammonium cation. As the ammonium cation source, ammonia is preferable.

The aqueous emulsion composition contains the component (D).

The content of the component (B) in the aqueous emulsion composition is usually 20 to 60 parts by weight relative to 100 parts by weight of sum of the component (A) and the component (C).

The content of the component (C) in the aqueous emulsion composition is usually 1 to 30 parts by weight relative to 100 parts by weight of the component (A).

The sum of the contents of the components (A), (B) and (C) in the aqueous emulsion composition is usually 10 to 60 parts by weight relative to 100 parts by weight of the aqueous emulsion composition.

The aqueous emulsion composition is an emulsion wherein the component (A) and the component (B) are dispersoids and the component (C) is a dispersion medium.

The volume-based median diameter of the dispersoid of the aqueous emulsion composition is 0.01 to 1 μm, preferably 0.05 to 0.95 μm, and more preferably 0.05 to 0.5 μm.

It is preferred that the volume-based median diameter thereof is 0.01 μm or more because the production of the aqueous emulsion is easy, and it is preferred that it is 1 μm or less because the adhesiveness of the cured product obtained by drying the aqueous emulsion composition tends to be improved.

Herein, "volume-based median diameter" means a particle diameter corresponding to 50% of the value of an integrated particle diameter distribution on a volume standard.

The aqueous emulsion composition is a composition comprising an aqueous emulsion comprising the components (A), (C) and (D) and an aqueous emulsion comprising the components (B) and (D).

While the aqueous emulsion composition can be prepared by a process comprising melt-kneading the components (A) and (B) followed by mixing the melted mixture obtained with the components (C) and (D), it is preferably prepared by mixing an aqueous emulsion comprising the components (A), (C) and (D) (hereinafter, simply referred to as the aqueous emulsion (I)) with an aqueous emulsion comprising the components (B) and (D) (hereinafter, simply referred to as the aqueous emulsion (II)).

The aqueous emulsion (I), for example, a process for kneading the components (A) and (C) with the action of a shear stress followed by dispersing the kneaded product obtained in the component (D); a process for dissolving the component (A) in an organic solvent such as toluene, mixing the solution obtained with the component (C) with the action of a shear stress, dispersing the mixture obtained in the component (D) and then, removing the organic solvent from the dispersion obtained are listed.

The shear rate on the action of a shear stress is usually about 200 to about 100000 $sec^{-1}$, and preferably about 1000 to about 2500 $sec^{-1}$. "Shear rate" means a value obtained by dividing the peripheral velocity [mm/sec] of the outermost peripheral part of a screw element by the clearance [mm] between a screw and a barrel.

Examples of an apparatus for the action of a shear stress include instruments having a barrel (cylinder) such as multi-screw extruders such as twin screw extruders, LABO PLASTOMILL (manufactured by Toyo Seiki Seisaku-sho Ltd.) and LABO PLASTOMILL μ (manufactured by Toyo Seiki Seisaku-sho Ltd.), a homogenizer and T.K. FILMIX (manufactured by PRIMIX Corporation).

Examples of the process using the multi-screw extruder include a process comprising feeding the component (A) through a hopper of the multi-screw extruder having two or more screws in its casing, conducting the heating and melt-kneading of the component (A), feeding the components (C) and (D) thereto through at least one liquid feeding port provided in a compression zone and/or a metering zone of the extruder, and dispersing the components (A) and (C) in the component (D) with kneading.

The emulsion can also be produced using an instrument having no barrel (cylinder). Examples of the instrument include a stirring vessel, a chemical stirrer, a vortex mixer, a flow jet mixer, a colloid mill, an ultrasonic wave generator, a high-pressure homogenizer, BUNSANKUN (trade mark registered by Fujikin Inc.), a static mixer and a micro mixer.

Additionally, the emulsion can also be produced by a chemical emulsifying method such as self-emulsification.

Preferably, the process for kneading the components (A) and (C) with the action of a shear stress followed by dispersing the kneaded product obtained in the component (D) is preferable from the viewpoint that the emulsion having the desired median diameter can be easily obtained, a process using a twin screw extruder or a multi-screw extruder is more preferable because the modified product A having high viscosity can be treated, and a process using a twin screw extruder is especially preferable.

The volume-based median diameter of the dispersoid of the emulsion (I) is usually 0.01 μm to 1 μm, preferably 0.05 μm to 0.95 μm, and more preferably 0.05 μm to 0.5 μm.

The content of the component (C) in the emulsion (I) is usually 1 to 30 parts by weight relative to 100 parts by weight of the component (A).

The emulsion (II) can be prepared, for example, by a process comprising melting the component (B), mixing the melted product obtained with a basic compound, and then, adding the component (D) thereto. Specific examples thereof include a process comprising mixing the component (B), the basic compound, a water-soluble organic solvent and the component (D) at about 50 to about 150°C, and producing an oil-in-water emulsion from the mixture obtained with a homogenizer, a high-shear typed rotary emulsifying disperser or the like, so-called machine emulsifying method, and a process comprising mixing the component (B), the basic compound, a water-soluble organic solvent and water at about 50 to about 150°C to form a water-in-oil emulsion followed by adding water thereto to conduct a phase transition, so-called phase transition method.

Examples of the basic compound include an alkali metal hydroxide such as sodium hydroxide and potassium hydroxide; an alkaline earth metal hydroxide such as calcium hydroxide; ammonia; and an amine such as methylamine, ethylamine, propylamine, butylamine, hexylamine, octylamine, ethanolamine, isopropylamine, propanolamine, 2-methyl-2-aminopropanol, diethanolamine, N,N-diethylethanolamine, N-methyldiethanolamine, dimethylamine, triethylamine,

morpholine, N-methylmorpholine and N-ethylmorpholine, and an amine is preferable, and 2-methyl-2-aminopropanol is more preferable.

The amount used of the basic compound is preferably an amount wherein pH of the emulsion (II) becomes to 6 to 11, and more preferably an amount wherein pH thereof becomes to 7 to 9.

"Water-soluble organic solvent" means an organic solvent capable of being soluble in 2.5% by mass or more in water at 20°C at normal pressure. Specific examples thereof include an alcohol solvent such as methanol, ethanol, propanol, isopropanol, 1-butanol, 2-butanol, isobutanol, tert-butanol and 1-pentanol, a ketone solvent such as acetone and methyl ethyl ketone, an ether solvent such as diethyl ether and tetrahydrofuran, a cellosolve solvent such as 2-methoxyethanol, 2-ethoxyethanol and 2-butoxyethanol, an alkylene glycol solvent such as ethylene glycol, propylene glycol and diethylene glycol, and a polyalcohol solvent such as glycerin. These water-soluble solvents may be used alone, and may be mixed to be used. Among them, preferred is an alcohol capable of being soluble in 5% by mass or more in water, and more preferred are 1-butanol, 2-butanol, isobutanol and tert-butanol.

The ratio of the water-soluble organic solvent to the component (D) is usually 25/75 to 0/100 (the water-soluble organic solvent/the component (D)).

The emulsion (II) can contain the component (C).

The aqueous emulsion is prepared by mixing the emulasion (I) with the emulsion (II) so that the amounts of the components other than the component (D) in the emulsion (II) can usually become 20 to 60 parts by weight relative to 100 parts by weight of the components other than the component (D) in the emulsion (I).

The aqueous emulsion composition may contain other aqueous emulsions such as a polyurethane aqueous emulsion and an ethylene-vinyl acetate copolymer aqueous emulsion, thermosetting resins such as a urea resin, a melamine resin and a phenol resin, fillers such as clay, kaolin, talc and calcium carbonate, antiseptics, rust preventives, defoaming agents, foaming agents, thickeners such as polyacrylic acid, polyether, methyl cellulose, carboxymethylcellulose, polyvinyl alcohol and starch, viscosity modifiers, flame retarders, pigments such as titanium oxide, high boiling solvents such as dimethyl succinate and dimethyl adipate, and plasticizers. When the aqueous emulsion composition is applied on an adherend having low interfacial tension such as polypropylene and polyester, the aqueous emulsion composition preferably contain silicon-typed additives such as polyether-modified polydimethylsiloxane or acetylene glycol-typed surfactant from the viewpoint of improving the wettability of the aqueous emulsion composition.

The aqueous emulsion composition preferably contains fillers from the viewpoint of improving flame resistance of the cured product obtained by drying the aqueous emulsion composition or a coating property of the aqueous emulsion composition, and the amount thereof is usually about 1 to about 500 parts by weight relative to 100 parts by weight of solid components in the aqueous emulsion composition, and preferably about 5 to about 200 parts by weight.

A laminate in which an aqueous emulsion composition layer is layered on an adherend can be obtained by applying the aqueous emulsion composition on the adherend, and by drying the laminate, a laminate comprising a layer formed of a cured product and the adherend can be obtained. The layer formed of a cured product can be used as a coating material, a primer, a base sheet, an adhesive agent or the like. "Adherend" means an article on which the aqueous emulsion composition can be applied and of which shape is optional. The drying temperature is usually 30 to 180°C, and preferably 60 to 150°C. The drying time is usually about 1 minute to about 12 hours, and preferably about 10 minutes to about 6 hours. The drying may be carried out under ventilation or under reduced pressure.

Examples of the adherend include wood-based materials such as wood, plywood, MDF, particle board and fiber board; paper-based materials such as wallpaper and wrapping paper; cellulosic materials such as cotton clothes, hemp cloth and rayon; plastic materials such as polyolefins such as polyethylene (polyolefin composed mainly of structural units derived from ethylene; the same shall apply hereinafter), polypropylene (polyolefin composed mainly of structural units derived from propylene; the same shall apply hereinafter) and polystyrene, polycarbonate, acrylonitrile/butadiene/styrene copolymer (ABS resin), (meth) acrylic resin polyester, polyether, polyvinyl chloride, polyurethane and forming polyurethane; ceramic materials such as glass and pottery; and metallic materials such as iron, stainless steel, copper and aluminum.

The adherend may be a composite material made of a plurality of materials. It may also be a kneaded shaped article made of an inorganic filler such as talc, silica and activated carbon, carbon fiber or the like, and a plastic material.

Herein, polyurethane is a macromolecule crosslinked with urethane linkages and can usually be obtained through a reaction between an alcohol (a compound having -OH) and an isocyanate (a compound having -NCO). Foaming polyurethane is polyurethane which is to be foamed with carbon dioxide generated from a reaction between an isocyanate and water which is a crosslinking agent or a volatile solvent like Freon. Semirigid polyurethane is used for automotive interior applications and rigid polyurethane is used for coating materials.

Among them, as the adherend, preferred are polypropylene, polystyrene, polycarbonate, acrylonitrile/butadiene/styrene copolymer (ABS resin), polyethylene terephthalate, polyvinyl chloride, (meth)acrylic resin, glass, aluminum and polyurethane, and more preferred are polypropylene, polyvinyl chloride, glass, aluminum and polyurethane.

The cured product obtained from the aqueous emulsion composition can be used as an adhesive layer adhering two kinds of the adherends. The cured product has superior water resistance. Herein, "water resistance" means a

property of being difficult to generate blister when a cured product obtained by applying an aqueous emulsion composition on an adherend followed by drying at 150°C for 30 minutes is dipped in water at 85°C, and the longer the time until generating blister after starting dipping, the more superior a water resistance is.

Additionally, the cured product obtained from the aqueous emulsion composition has a superior adhesiveness to an adherend such as polypropylene on which the other materials such as coating materials are difficult to adhere.

When one of the adherends is a water-absorbing adherend such as a wood-based material, a paper-based material and a cellulosic material, the aqueous emulsion composition is applied onto the water-absorbing adherend, and then, the component (D) contained in the aqueous emulsion composition is absorbed in the water-absorbing adherend to form an adhesive layer containing the component (A) and the component (B) on the water-absorbing adherend. Therefore, a laminate wherein the water-absorbing adhered, the adhesive layer and the other adherend are layered in this order can be obtained by applying the other adherend on the adhesive layer.

When one of the adherends is an adherend incapable of absorbing water such as a polyolefin, a laminate can be obtained by applying the aqueous emulsion composition onto the adherend incapable of absorbing water, heating to form a cured product on the adherend incapable of absorbing water, applying the other adherend onto the cured product, and further heating. The heating temperature is usually 60 to 200°C. The aqueous emulsion composition gives a cured product having a superior adhesiveness even at 60 to 90°C of the heating temperature, and further gives a cured product having a superior adhesiveness even at low temperature of 65 to 80°C of the heating temperature.

Onto the cured product obtained from the aqueous emulsion composition, a liquid material may be further applied as a coating material. Examples of the coating material include the materials for the above-mentioned adherends such as polyurethane and when it is a liquid material, it has a superior adhesiveness to the cured product.

## Examples

The present invention will be illustrated in more detail by Examples bellow, but the present invention is not limited to these Examples. "Part" and "%" in the following examples means weight basis, unless otherwise stated.

[Solid Components]

The solid components were measured by the method in accordance with JIS K-6828.

[Molecular Weight and Molecular Weight Distribution]

The molecular weights of the components (A) and (B) were measured with gel permeation chromatography (GPC). The calibration was conducted using polystyrenes (molecular weights 688 to 400,000) standard materials, and it was measured under the conditions given below. The molecular weight distribution was evaluated by the ratio (Mw/Mn) of a weight average molecular weight (hereinafter, referred to as Mw) to a number average molecular weight (hereinafter, referred to as Mn).

Model: 150-C manufactured by Waters
Column: shodex packed column A-80M
Measurement temperature: 140°C
Measurement solvent: orthodichlorobenzene
Measurement concentration: 1 mg/ml

[Content of Structural Unit Derived From Vinylcyclohexane]

The content of the structural unit derived from vinylcyclohexane in the component (A) was calculated based on the result obtained by measuring $^{13}$C-NMR spectrum of the component (A) under the conditions given below and the following formula (X).

$^{13}$C-NMR apparatus: DRX600 manufactured by BRUKER
Measurement solvent: mixed solvent of orthodichlorobenzene and orthodichlorobenzene-d 4:1 (volume ratio)
Measurement temperature: 135°C
Measurement method:

Powergate Decouping method
Pulse angle: 45°

Measurement basis: tetramethylsilane

$$\text{Content of the structural unit derived from vinylcyclohexane (mol\%)} = 100 \times Y/(Z-2Y) \qquad (X)$$

in the formula (1), Y represents an integration value of integration of signals at 45 ppm to 40 ppm and Z represents an integration value of integration of signals at 35 ppm to 25 ppm.

[Graft Amount]

The graft amount of maleic anhydride in the component (A) was determined as followed.

(i) A sample solution is prepared by dissolving 1.0 g of a sample in 20 ml of xylene.
(ii) The solution prepared is dropped into 300 ml of methanol while stirring.
(iii) The precipitate in methanol is collected, and then, dried at 80°C for 8 hours.
(iv) A film having 100 μm of thickness is prepared by hot pressing using the solid dried.
(v) The infrared absorption spectrum of the film prepared is measured, and the maleic acid graft amount is determined based on the absorption peak near 1780 $cm^{-1}$.

[Melt Flow Rate]

The melt flow rate (MFR) of the polymer was measured with a flow tester (CFT-500D, manufactured by Shimadzu Corporation) at 190°C. The weight was 0.49 MPa, and the inner diameter of die was 1 mm and the length thereof was 10 mm.

[Intrinsic viscosity]

The intrinsic viscosity ([η], unit: dl/g) of the component (A) was measured at 135°C by using tetralin as a solvent and by using an Ubbelohde's viscometer.

[Glass-transition Temperature and Melting Point]

The glass-transition temperature ([Tg], unit: °C) and the melting point ([Tm], unit: °C) were determined based on the differential scanning calorimetry curve obtained in step (c) by measuring a differential scanning calorimetry curve under the conditions given below with a differential scanning calorimeter (SSC-5200 manufactured by Seiko Instruments Inc.).

<Measurement condition>

(a) A sample is heated from 20°C to 200°C at a rate of 10°C/minute, and then, maintained at 200°C for 10 minutes.
(b) The sample obtained in (a) is cooled down from 200°C to -100°C at a rate of 10°C/minute, and then, maintained at -100°C for 10 minutes.
(c) The sample obtained in (b) is heated from -100°C to 200°C at a rate of 10°C/minute.

[Softening Point]

The softening point of the component (B) is a value obtained according to T1/2 method using a flow tester (CFT-500D, manufactured by Shimadzu Corporation). The weight was 0.49 MPa, and the inner diameter of die was 1 mm and the length thereof was 10 mm.

[Particle Diameter]

The particle diameter of the dispersoid in the aqueous emulsion is a volume-based median diameter when it is measured with a laser diffraction/scattering particle size distribution analyzer LA-910 8manufactured by HORIBA, Ltd.) at 1.50-0.20i of particle refractive index.

<Production Example 1 of Component (A)>

After replacing the gases inside a stainless steel reactor into argon gas, 386 parts of vinylcyclohexane and 3640 parts of toluene were charged therein. After the mixture obtained was heated up to 50°C, ethylene was charged into the reactor with pressurizing at 0.6 MPa. Further, 10 parts of a solution of triisobutylaluminum in toluene (manufactured by Tosoh Akzo Co., Ltd., concentration of triisobutylaluminum: 20 wt%) was charged therein, and then a solution obtained by dissolving 0.001 part of diethylsilyl(tetramethylcyclopentadienyl)(3-tert-butyl-5-methyl-2-phenoxy)titanium dichloride in 87 parts of dehydrated toluene and a solution obtained by dissolving 0.03 part of dimethylanilinium tetrakis(pentafluorophenyl)borate in 122 parts of dehydrated toluene were charged into the reactor. The mixture obtained was stirred for 2 hours. The reaction mixture obtained was pored into about 10, 000 parts of acetone and a white solid precipitated was isolated by filtration. The solid isolated was washed with acetone and then dried under reduced pressure to obtain 300 parts of an ethylene•vinylcyclohexane copolymer. [η] of the copolymer obtained was 0.48 dl/g, Mn thereof was 15, 600, Mw/Mn thereof was 2.0, Tm thereof was 57°C, Tg thereof was -28°C, and a content ratio of the structural unit derived from vinylcyclohexane was 13% by mole. The copolymer obtained is called as (A-1a).

<Production Example 2 of Component (A)>

To 100 parts of (A-1a), 0.4 part of maleic anhydride and 0.04 part of 1,3-bis(tert-butylperoxyisopropyl)benzene were added, and the mixture obtained was stirred enough to conduct a pre-mixing. The mixture obtained was fed through a feeding port of a twin screw extruder to carry out a melt-kneading. The melt-kneading was divided into two stages, the first half and the second half, and the temperature of the first half where the melt-kneading was conducted in the extruder and the temperature of the second half was set at 180°C and at 260°C, respectively, to conduct a melt-kneading. As the result, a polymer obtained by graft polymerizing maleic anhydride to ethylene•vinylcyclohexane copolymer was obtained. The graft amount of maleic acid of the polymer obtained was 0.2%, and MFR thereof was 180 g/10-minute (at 190°C, load: 2.16 kgf). The polymer obtained is called as (A-2a).

<Production Example 3 of Component (A)>

A propylene·vinylcyclohexane copolymer can be obtained according to the same manner as <Production Example 1 of Component (A) > except that propylene is used in place of ethylene. The polymer obtained is called as (A-1b).

<Production Example 4 of Component (A)>

A polymer obtained by graft polymerizing maleic anhydride to propylene·vinylcyclohexane copolymer can be obtained according to the same manner as <Production Example 1 of Component (A)> except that (A-1b) is used in place of (A-1a). The polymer obtained is called as (A-2b).

<Production Example of Component (C)>

Seven point five (7.5) parts (10. 9 molar ratio) of acrylic acid (manufactured by Mitsubishi Chemical Corporation), 22.5 parts (27.4 molar ratio) of methacrylic acid (manufactured by Kanto Chemical Co., Inc.), 29.5 parts (26.6 molar ratio) of 2-hydroxyethyl acrylate (manufactured by Kanto Chemical Co., Inc.), 29.5 parts (30.8 molar ratio) of ethyl acrylate and 11 parts (4.4 molar ratio) of lauryl methacrylate (manufactured by Mitsubishi Rayon Co., Ltd.) were mixed at 10 to 30°C to obtain 100 parts of a monomer mixture. "Molar ratio", herein, represents a molar number of each monomer when sum of molar numbers of the above-mentioned monomers is 100.

Into a reactor, 150 parts of isopropanol and the monomer mixture prepared as above were charged. After replacing the gases inside the reactor into nitrogen gas, 0.9 parts of 2,2'-azobisisobutyronitrile was added as a polymerization initiator and the mixture obtained was stirred at 80°C for 2 hours. The reaction mixture obtained was heated up until boiling to distill isopropanol away. After the inner temperature of the concentrate obtained was cooled down to 50°C, 29 parts (48 molar ratio, the molar ratio represents a molar number of ammonia when sum of molar numbers of the above-mentioned monomers is 100.) of 28% aqueous ammonia solution was mixed therewith, and water was added thereto to obtain an emulsifier. The emulsifier is called as (C-1). Yield 90%.

<Production Example 1 of Emulsion (I)>

A cylinder temperature of an intermeshing co-rotating twin screw extruder (manufactured by The Japan Steel Works, Ltd. : TEX30φ, L/D=30) was set at 110°C, and then, 110 parts of (A-1b) was continuously fed through a hopper of the extruder at a rotating speed of the screw of 350 rpm therein.

Through a feeding port provided in a bent zone of the extruder, (C-1) of which solid amount was 10 parts was continuously fed with gear pump while pressing to obtain a creamy white aqueous emulsion. The aqueous emulsion obtained is called as (I-1b). The particle diameter of the dispersoid of the aqueous emulsion obtained was 0.6 μm.

<Production Example 2 of Emulsion (I)>

An aqueous emulsion can be obtained according to the same manner as <Production Example 1 of Emulsion (I)> except that (A-1a) is used in place of (A-1b). The aqueous emulsion is called as (I-1a).

<Production Example 3 of Emulsion (I)>

An aqueous emulsion can be obtained according to the same manner as <Production Example 1 of Emulsion (I)> except that (A-2a) is used in place of (A-1b). The aqueous emulsion is called as (I-2a).

<Production Example 4 of Emulsion (I)>

An aqueous emulsion can be obtained according to the same manner as <Production Example 1 of Emulsion (I)> except that (A-2b) is used in place of (A-1b). The aqueous emulsion is called as (I-2b).

<Production Example 1 of Component (B)>

To a reactor equipped with a stirrer, a thermometer, a reflux condenser and a nitrogen gas injection tube, 1000 parts of LICOCENE PP 1502 (LICOCENE is a registered trademark by Clariant) which is a polyethylene•polypropylene copolymer, 1 parts of sorbitol and 50 parts of propylene glycol monomethyl ether acetate were added. Under an atmosphere of nitrogen, the reactor was dipped in an oil bath maintained at 180°C, the temperature of the oil bath was adjusted so that the inner temperature of the reactor could be set at 170°C with stirring. After melting the copolymer in the reactor, a solution obtained by dissolving 60 parts of maleic anhydride, 120 parts of butyl methacrylate and 10 parts of di-tert-butyl peroxide in 150 parts of propylene glycol monomethyl ether acetate was added dropwise thereto over 2 hours while keeping a homogeneous with stirring.

After completion of adding dropwise, the reaction system was maintained for 2 hours with keeping at 170°C, and then, the removing of propylene glycol monomethyl ether acetate, unreacted maleic anhydride, butyl methacrylate, di-tert-butyl peroxide and low molecular compounds generated by the decomposition of di-tert-butyl peroxide was conducted for 1 hour while reducing in the reactor. After completion of reducing, the reaction product was isolated, and cooled to obtain solid of a copolymer modified with butyl methacrylate and maleic anhydride. The copolymer obtained is called as (B-1) The softening point of (B-1) was 87°C.

<Production Example 1 of Emulsion (II)>

To a reactor equipped with a stirrer, a thermometer and a reflux condenser, 100 parts of (B-1) was added, and the reactor was dipped in an oil bath maintained at 130°C to melt (B-1). Six parts of an aqueous solution of 2-methyl-2-aminopropanol (concentration 90%), and 50 parts of 2-butanol were added while keeping the temperature of the oil bath at 130°C. Ion-exchanged water at 80°C was added little by little thereto while stirring the mixture obtained strongly. Once the viscosity was increased, the viscosity was, however, decreased by a continuation of the addition of ion-exchanged water. After 250 parts of ion-exchanged water was added, the cooling was carried out until the inner temperature became at 30°C. The mixture obtained was filtrated with a nylon filter having 100 mesh to obtain an aqueous emulsion. The emulsion obtained is called as (II-1). The particle diameter of (II-1) obtained was 0.5 μm.

<Production Example 2 of Emulsion (II)>

To a reactor equipped with a stirrer, a thermometer and a reflux condenser, 100 parts of (B-1) and 10 parts of AS 1540 (alkenylsuccinic anhydride manufactured by SEIKO PMC CORPORATION) were added, and the reactor was dipped in an oil bath maintained at 130°C to melt (B-1). To the reactor, 10 parts of an aqueous solution of 2-methyl-2-aminopropanol (concentration 90%) was added, and then, ion-exchanged water at 80°C was added little by little thereto

while stirring the mixture obtained strongly. Once the viscosity was increased, the viscosity was, however, decreased by a continuation of the addition of ion-exchanged water. Two hundred five (250) parts of ion-exchanged water was added thereto to obtain a creamy white aqueous emulsion. The emulsion obtained is called as (II-2). The particle diameter of (II-2) obtained was 0.2 μm.

Example 1

The aqueous emulsion (I-2a) and the aqueous emulsion (II-1) were blended in a ratio of 4/1 in solid equivalent, and then, the mixture obtained was stirred to obtain an aqueous emulsion composition.

[Water Resistance]

The aqueous emulsion obtained as above was applied onto a polypropylene plate so that the film thickness of the cured product obtained by drying could become about 5 μm, and then, dried at 150°C for 30 minutes to obtain a laminate wherein the cured product layer was layered on the polypropylene plate.

The laminate obtained was dipped in water at 85°C for seven days, and the generation of blister in the cured product layer of the laminate was not confirmed..

[Adhesiveness Evaluation]

The aqueous emulsion obtained as above was applied onto a propylene plate so that the film thickness of the cured product obtained by drying could become about 10 μm, and then, dried for 30 minutes at 80°C to obtain a laminate wherein the cured product layer was layered on the polypropylene plate.

The cuts were formed on a grid at a 1 mm-clearance interval on the surface of the cured product layer of the laminate obtained to prepare hundred squares. The scotch tape was put thereon, and after a lapse of predetermined time, the tape was peeled, and ninety or more squares were remained without peeling.

The adhesiveness test as same as the above of the laminate obtained according to the same as that in the above except that the heating temperature was set at 90°C was conducted, and ninety or more squares were remained without peeling.

Further, the same adhesiveness test as the above of the laminate obtained according to the same manner as that in the above except that the heating temperature was set at 120°C was conducted, and ninety or more squares were remained without peeling.

Example 2

An aqueous emulsion composition was obtained according to the same manner as Example 1 except that the aqueous emulsion (II-2) is used in place of the aqueous emulsion (II-1). A laminate wherein the cured product layer was layered on the polypropylene plate was obtained using the aqueous emulsion obtained according to the same manner as Example 1.

The evaluation of water resistance of the laminate obtained was conducted according to the same manner as Example 1, and the generation of blister was not confirmed. The evaluation of adhesiveness of the laminate obtained was conducted according to the same manner as Example 1, and the same result as that of Example 1 was obtained.

Comparative Example 1

A laminate wherein the cured product layer was layered on the polypropylene plate was obtained according to the same manner as Example 1 except that the aqueous emulsion (II-1) was used in place of the aqueous emulsion composition prepared from the aqueous emulsion (I-2a) and the aqueous emulsion (II-1).

The laminate obtained was dipped in water at 85°C for three days, and the generation of blisters having more than 5 mm of the diameter in the cured product layer was confirmed.

Comparative Example 2

A laminate wherein the cured product layer was layered on the polypropylene plate was obtained according to the same manner as Example 1 except that the aqueous emulsion (II-2) was used in place of the aqueous emulsion composition prepared from the aqueous emulsion (I-2a) and the aqueous emulsion (II-1).

The laminate obtained was dipped in water at 85°C for three days, and the generation of blisters having more than 5 mm of the diameter in the cured product layer was confirmed.

Example 3

An aqueous emulsion composition can be obtained according to the same manner as Example 1 except that the aqueous emulsion (I-1a) is used in place of the aqueous emulsion (I-2a).

Example 4

An aqueous emulsion composition can be obtained according to the same manner as Example 1 except that the aqueous emulsion (I-2b) is used in place of the aqueous emulsion (I-2a).

Example 5

An aqueous emulsion composition can be obtained according to the same manner as Example 1 except that the aqueous emulsion (I-1b) is used in place of the aqueous emulsion (I-2a).

Industrial Applicability

The cured product obtained from the aqueous emulsion of the present invention gives a cured product having a superior adhesiveness to an adherend such as polypropylene on which the other materials such as coating materials are difficult to adhere, and the cured product obtained has also a superior water resistance, and therefore, it can be used as an adherend layer to which water resistance is required.

## Claims

**1.** A laminate comprising a layer formed of a cured product obtained by drying an aqueous emulsion composition comprising the following components (A), (B), (C) and (D), and an adherend;

(A) a copolymer which comprises at least one structural unit selected from the group consisting of a structural unit derived from ethylene, a structural unit derived from propylene and a structural unit derived from linear α-olefin having 4 or more carbon atoms, and a structural unit derived from a vinyl compound represented by the formula (I):

$$CH_2=CH-R \qquad (I)$$

wherein R represents a secondary alkyl group, a tertiary alkyl group or an alicyclic hydrocarbon group, and in which the content of the structural unit derived from the vinyl compound represented by the formula (I) is 5% by mole or more and 40% by mole or less, or
a modified copolymer obtained by graft polymerizing an α,β-unsaturated carboxylic acid compound to the above-mentioned copolymer,

(B) a copolymer obtained by graft polymerizing an α,β-unsaturated carboxylic acid compound to a copolymer which comprises at least one structural unit selected from the group consisting of a structural unit derived from ethylene, a structural unit derived from propylene and a structural unit derived from linear α-olefin having 4 or more carbon atoms, and which may contain a structural unit derived from the above-mentioned vinyl compound represented by the formula (I), and in which the content of the structural unit derived from the vinyl compound represented by the formula (I) is less than 5% by mole,
(C) an emulsifier
(D) water.

**2.** The laminate according to claim 1, wherein the aqueous emulsion composition is obtained by mixing an aqueous emulsion comprising the components (A), (C) and (D) with an aqueous emulsion comprising the components (B) and (D).

**3.** The laminate according to claim 1, which comprises a cured product layer obtained from a composition comprising an aqueous emulsion comprising the components (A), (C) and (D), and an aqueous emulsion comprising the components (B) and (D), and an adherend.

**4.** The laminate according to claim 1, 2 or 3, wherein the adherend is an adherend consisting of at least one material selected from the group consisting of a wood-based material, a cellulosic material, a plastic material, a ceramic material and a metallic material.

**5.** The laminate according to claim 1, 2 or 3, wherein the emulsifier is a water-soluble acrylic resin comprising a structural unit derived from an α,β-unsaturated carboxylic acid and a structural unit derived from an α,β-unsaturated carboxylate.

**6.** The laminate according to claim 1, 2 or 3, wherein R is a secondary alkyl group, a tertiary alkyl group or a cycloalkyl group.

**7.** The laminate according to claim 1, 2 or 3, wherein the vinyl compound represented by the formula (I) is vinylcyclohexane.

**8.** The laminate according to claim 2 or 3, wherein the aqueous emulsion comprising the components (A), (C) and (D) is an aqueous emulsion obtained by kneading the component (A) and (C) with the action of a shear stress followed by dispersing the kneaded product in the component (D).

**9.** The laminate according to claim 2 or 3, wherein the components other than water in the aqueous emulsion comprising the components (B) and (D) is 20 to 60 parts by weight relative to 100 parts by weight of the components other than water in the aqueous emulsion comprising the components (A), (C) and (D).

**10.** An aqueous emulsion composition comprising the following components (A), (B), (C) and (D);

(A) a copolymer which comprises at least one structural unit selected from the group consisting of a structural unit derived from ethylene, a structural unit derived from propylene and a structural unit derived from linear α-olefin having 4 or more carbon atoms, and a structural unit derived from a vinyl compound represented by the formula (I):

$$CH_2=CH\text{-}R \qquad (I)$$

wherein R represents a secondary alkyl group, a tertiary alkyl group or an alicyclic hydrocarbon group, and in which the content of the structural unit derived from the vinyl compound represented by the formula (I) is 5% by mole or more and 40% by mole or less, or
a modified copolymer obtained by graft polymerizing an α,β-unsaturated carboxylic acid compound to the above-mentioned copolymer,

(B) a copolymer obtained by graft polymerizing an α,β-unsaturated carboxylic acid compound to a copolymer which comprises at least one structural unit selected from the group consisting of a structural unit derived from ethylene, a structural unit derived from propylene and a structural unit derived from linear α-olefin having 4 or more carbon atoms, and which may contain a structural unit derived from the above-mentioned vinyl compound represented by the formula (I), and in which the content of the structural unit derived from the vinyl compound represented by the formula (I) is less than 5% by mole,
(C) an emulsifier
(D) water.

**11.** The aqueous emulsion composition according to claim 10, which is obtained by mixing an aqueous emulsion comprising the components (A), (C) and (D) with an aqueous emulsion comprising the components (B) and (D).

**12.** The aqueous emulsion composition according to claim 10 or 11, wherein the emulsifier is a water-soluble acrylic resin comprising a structural unit derived from an α,β-unsaturated carboxylic acid and a structural unit derived from an α,β-unsaturated carboxylate.

**13.** The aqueous emulsion composition according to claim 10 or 11, wherein R is a secondary alkyl group, a tertiary alkyl group or a cycloalkyl group.

**14.** The aqueous emulsion composition according to claim 10 or 11, wherein the vinyl compound represented by the

formula (I) is vinylcyclohexane.

**15.** The aqueous emulsion composition according to claim 11, wherein the aqueous emulsion comprising the components (A), (C) and (D) is an aqueous emulsion obtained by kneading the component (A) and (C) with the action of a shear stress followed by dispersing the kneaded product in the component (D).

**16.** The aqueous emulsion composition according to claim 11, wherein the components other than water in the aqueous emulsion comprising the components (B) and (D) is 20 to 60 parts by weight relative to 100 parts by weight of the components other than water in the aqueous emulsion comprising the components (A), (C) and (D).

**17.** A process for producing a laminate comprising a step of applying the aqueous emulsion composition according to any of claims 10 to 16 onto an adherend to obtain a laminate comprising an aqueous emulsion layer and the adherend, and a step of drying the laminate obtained to obtain a laminate comprising a layer formed of a cured product and the adherend.

**18.** Use of the aqueous emulsion composition according to any of claims 10 to 16 for forming a cured product layer on an adherend.

**INTERNATIONAL SEARCH REPORT**

International application No. PCT/JP2010/061225

A. CLASSIFICATION OF SUBJECT MATTER
*B32B27/32*(2006.01)i, *C08L23/02*(2006.01)i, *C08L23/26*(2006.01)i, *C08L51/06*(2006.01)i

According to International Patent Classification (IPC) or to both national classification and IPC

B. FIELDS SEARCHED

Minimum documentation searched (classification system followed by classification symbols)
B32B27/32, C08L23/02, C08L23/26, C08L51/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2007/123071 A1 (Sumitomo Chemical Co., Ltd., Sumika Chemtex Co., Ltd.), 01 November 2007 (01.11.2007), page 4, lines 12 to 15; page 10, lines 5 to 30; page 11, lines 37 to 44; examples 1 to 11; claims & JP 2008-63557 A & US 2009/0186232 A1 & EP 2014719 A1 & KR 10-2009-0006121 A & CN 101460565 A | 1-18 |
| Y | JP 8-176356 A (Ube Industries, Ltd.), 09 July 1996 (09.07.1996), claims; paragraph [0028]; examples 1 to 6 (Family: none) | 1-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 July, 2010 (21.07.10) | 03 August, 2010 (03.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/061225

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-327878 A (Mitsui Chemicals, Inc.), 28 November 2000 (28.11.2000), claims; paragraph [0114]; example 1 (Family: none) | 1-18 |
| Y | JP 10-298295 A (Du Pont-Mitsui Polychemicals Co., Ltd.), 10 November 1998 (10.11.1998), claims; paragraphs [0015], [0019] (Family: none) | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009040920 A
- JP 2003082028 A
- JP 2003160621 A
- JP 2000128932 A